# EUROPÄISCHE PATENTSCHRIFT

(11) **EP 1 502 783 B1**
(45) Veröffentlichungstag und Bekanntmachung des Hinweises auf die Patenterteilung: **22.08.2007**
(21) Anmeldenummer: 04016630.8
(22) Anmeldetag: 15.07.2004
(51) Int. Cl.: B60H 1/00

(54) **Klimaanlage und deren Anordnung in einem Fahrzeug**
Air conditioner and its arrangement in a vehicle
Dispositif de conditionnement d'air et son agencement dans un véhicule

(30) Priorität: 30.07.2003 DE 10335174
(43) Veröffentlichungstag der Anmeldung: 02.02.2005
(73) Patentinhaber: Behr GmbH & Co. KG, 70469 Stuttgart (DE)
(72) Erfinder: Schmadl, Dieter, 71672 Marbach (DE)

(56) Entgegenhaltungen:
- EP-A- 0 281 457
- EP-A- 0 863 030
- EP-A- 0 904 964
- DE-A1- 10 242 669

## Beschreibung

Die Erfindung betrifft eine Klimaanlage und deren Anordnung in einem Kraftfahrzeug, gemäß dem Oberbegriff des Anspruchs 1.

Im Stand der Technik verbreitet ist hinter einer Stirnwand im Fahrzeuginnenraum ein Klimagerät angeordnet, wobei es sich üblicherweise um einen Heizkörper, einen Verdampfer und ein zur Luftförderung geeignetes Gebläse handelt. Nachteilig hieran ist, dass eine Mehrzahl von entsprechend dimensionierten Durchbrüchen in der Stirnwand vorgesehen sein müssen, um die benötigte Außenluft dem Klimagerät zuzuführen, um Kältemittelleitungen zum Verdampfer durchzulassen und um Kühlmittel dem Heizkörper zuzuführen.

Auf Grund dieser funktionell notwendigen Öffnungen in der Stirnwand kann es zu Beeinträchtigungen der Festigkeit der Karosserie führen, so dass Versteifungen in der Stirnwand erforderlich sind, welche die Herstellungskosten unter anderem auf Grund der komplizierteren Form und des höheren Materialbedarfs erhöhen und was ferner zu einer unerwünschten Gewichtserhöhung führt.

Aus der Europäischen Patentanmeldung EP 0 904 964 ist ein Lufttemperier- und Verteilungsmodul eines Fahrzeuges bekannt, wobei eine innere Feuerwand und eine äußere Feuerwand eine Vielzahl von Komponenten, wie beispielsweise ein Gebläse, eine elektronische Steuereinheit, einen Klimaverdampfer, sowie eine Heizungseinheit aufnehmen.

Es ist Aufgabe der Erfindung, eine verbesserte Klimaanlage und deren Anordnung in einem Kraftfahrzeug zur Verfügung zu stellen.

Diese Aufgabe wird gelöst durch eine Klimaanlage und deren Anordnung in einem Kraftfahrzeug mit den Merkmalen des Anspruchs 1. Vorteilhafte Ausgestaltungen sind Gegenstand der Unteransprüche.

Erfindungsgemäß ist Klimaanlage vorgesehen, wobei der Verdampfer und/oder der Heizkörper in eine Stirnwand direkt integriert angeordnet ist. Die integrierte Anordnung in der Stirnwand spart Bauraum. Ferner ist bei einer Integration des Verdampfers eine gute und konstruktiv einfache Ableitung des hier anfallenden Kondenswassers über den Motorraum oder Aggregatraum möglich. Der Verdampfer, wie auch das Gebläse und der Gebläsemotor sind gut zugänglich über den Aggregatraum zwecks Wartung, Reinigung und Reparatur. Entsprechend einfach ist eine Demontage des Verdampfers. Dabei sind der Heizkörper und die Luftverteilung über diesen Zugang zur Wartung, Reinigung und Reparatur relativ gut zugänglich.

Vorzugsweise weist die Stirnwand eine Öffnung auf, in die vorzugsweise der Verdampfer und/oder Heizkörper eingesetzt ist. Dabei übernimmt dieser eine tragende Funktion in der Stirnwand, so dass keine zusätzlichen Verstärkungsrippen oder ähnliches erforderlich sind. Es erfolgt keine Schwächung der Festigkeit der Karosserie. Ferner kommt es zu einer Gewichtsreduzierung. Dadurch, dass bevorzugt der Verdampfer in der Öffnung angeordnet ist, ergibt sich eine gute Geräuschdämmung, da der Verdampfer oder der Heizkörper die Öffnung vollständig versperrt. Auch im Falle eines Crashs bietet eine Anordnung des Verdampfers in der Öffnung Vorteile, da der Verdampfer als zusätzliches Crash-Element wirkt, so dass Vorgaben in Hinblick auf Eindringtiefe und Abstände zur Amaturen-Oberfläche gut erfüllt werden können. Ebenfalls ergibt sich eine sehr günstige Anordnung des Expansionsventils des Verdampfers.

Bevorzugt ist der Verdampfer und/oder Heizkörper großflächig mittels einer umlaufenden gummielastischen Halterung gelagert. Eine derartige gummielastische Halterung unterstützt unter anderem die Geräuschdämmung. Auf Grund der tragenden Funktion des Verdampfers und/oder Heizkörpers kommt es zu keinen Schwingungen relativ zur Stirnwand, so dass diesbezüglich keine störenden Geräusche auftreten.

Der Verdampfer und/oder Heizkörper kann in einer in der Stirnwand vorgesehenen, insbesondere teilweise offenen, Tasche oder Aufnahme gelagert sein, in die er gesteckt ist. Dies ermöglicht eine einfache Montage und sichere Lagerung. Zusätzlich ist im Falle einer offenen Tasche eine sehr große Anlagefläche zwischen Verdampfer bzw. Heizkörper und der Stirnwand, welche die Tasche bildet, gegeben, so dass keine Materialüberbelastung erfolgt.

Vorzugsweise ist der Verdampfer und/oder Heizkörper mittels einer oder mehrerer Clips-Verbindungen an der Stirnwand befestigt oder mittels einer Halterung gelagert, wobei er mittels einer oder mehrerer Schraubverbindungen an der Stirnwand befestigt ist. Clips-Verbindungen ermöglichen eine einfache, bei der Montage sehr schnelle und relativ sichere Verbindung. Schraubverbindungen sind etwas aufwändiger, jedoch sicherer und in der Regel leichter lösbar.

Die Luftansaugung mit dem Gebläse und gegebenenfalls einem Filter sind bevorzugt im Aggregatraum angeordnet und an der Stirnwand befestigt. Hierbei ist bevorzugt der Verdampfer in die Stirnwand integriert angeordnet, wobei der Verdampfer eine tragende Funktion erfüllt. Im Innenraum sind vorzugsweise der Heizkörper und die Luftverteilung an der Stirnwand befestigt. Die Stirnwand wird hierbei nur gering durch den Heizkörper und die Luftverteilung belastet.

Im Folgenden wird die Erfindung anhand eines Ausführungsbeispiels unter Bezugnahme auf die Zeichnung im Einzelnen erläutert. In der Zeichnung zeigen:
- Fig. 1: einen schematisch dargestellten Schnitt durch eine Stirnwand mit integriert angeordnetem Verdampfer von der linken Seite eines Kraftfahrzeugs aus gesehen,
- Fig. 2: einen schematisch dargestellten Schnitt durch die Stirnwand von Fig. 1 mit integriert angeordnetem Verdampfer von oben gesehen, und
- Fig.3: eine perspektivische Ansicht von Fig. 1.

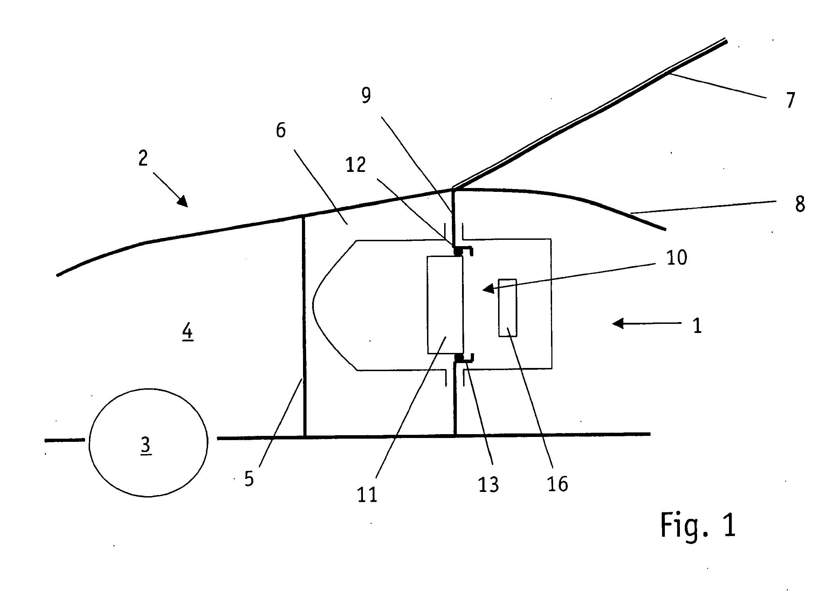

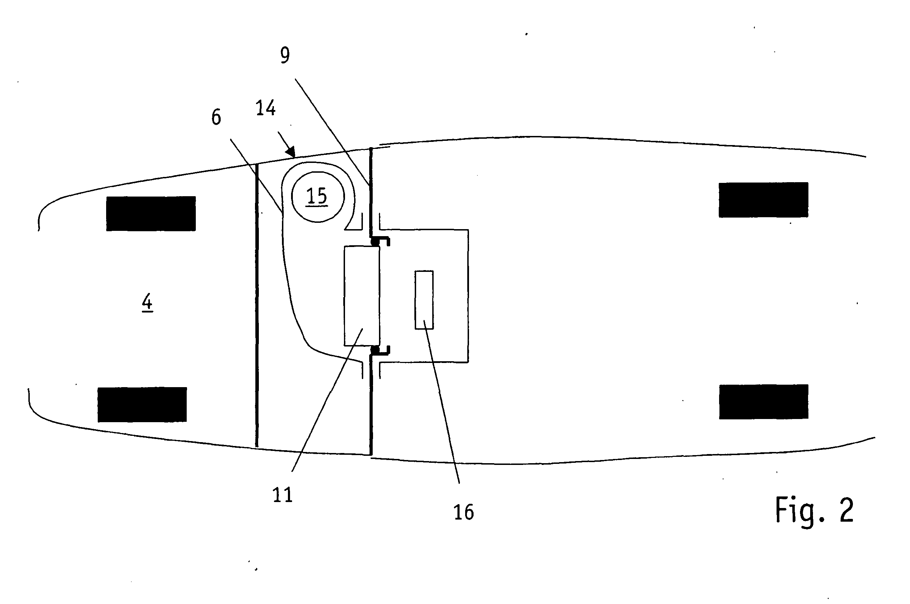

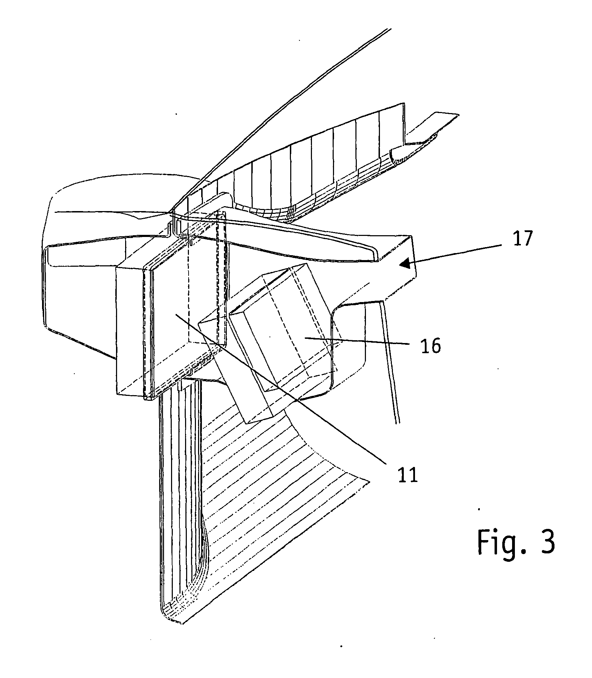

Die Figuren 1 bis 3 zeigen eine Klimaanlage 1 für ein in seinen Konturen angedeutetes Kraftfahrzeug 2. In Fig. 1 links dargestellt befindet sich oberhalb des Vorderrades 3 der Motorraum 4. Von diesem durch eine Wand 5 getrennt ist der Aggregatraum 6. Am unteren Ende der Windschutzscheibe 7, welche hier mit der Amaturentafel 8 zusammentrifft, ist in vertikaler Richtung verlaufend eine Stirnwand 9 quer zur Längsrichtung des Kraftfahrzeugs 2 angeordnet.

In der Stirnwand 9 ist eine vorliegend etwa rechteckförmige Öffnung 10 vorgesehen, in welcher ein Verdampfer 11, der Teil der Klimaanlage 1 ist, angeordnet ist. Der Verdampfer 11 ist großflächig mittels einer umlaufenden gummielastischen Halterung 12 gelagert. Hierfür weist die Stirnwand 9 im Bereich der Öffnung 10 einen verbreiterten Rand 13 auf, so dass eine großflächige Kraftübertragung zwischen Stirnwand 9 und Verdampfer 11 möglich ist, so dass der Verdampfer 11 einen Teil der auftretenden Kräfte von einer Seite der Öffnung 10 zur anderen Seite der Öffnung 10 überträgt. Dieser verbreiterte Rand 13 kann so breit ausgestaltet sein, dass er eine Art taschenförmige Aufnahme bildet, welche jedoch offen ist, so dass Zuleitungen zum Verdampfer oder gegebenenfalls Heizkörper möglich sind, ohne dass weitere Durchbrüche in der Stirnwand vorgesehen sein müssen.

Im Aggregatraum 6 ist eine Luftansaugung 14 und ein Gebläse 15 angeordnet, welches die angesaugte Luft zum Verdampfer 11 führt. Auf der anderen Seite der Stirnwand 9 ist dem Verdampfer 11 nachgeordnet ein Heizkörper 16 sowie eine Luftverteilung 17 angeordnet, mittels der die temperierte Luft dem Innenraum zugeführt wird.

### Bezugszeichenliste

- 1: Klimaanlage
- 2: Kraftfahrzeug
- 3: Vorderrad
- 4: Motorraum
- 5: Wand
- 6: Aggregatraum
- 7: Windschutzscheibe
- 8: Amaturentafel
- 9: Stirnwand
- 10: Öffnung
- 11: Verdampfer
- 12: Halterung
- 13: Rand
- 14: Luftansaugung
- 15: Gebläse
- 16: Heizkörper
- 17: Luftverteilung

## Patentansprüche

1. Klimaanlage für ein Kraftfahrzeug (2) mit einem Heizkörper (16), einem Verdampfer (11), einer Luftansaugung (14), einem Gebläse (15) und einer Luftverteilung (17), wobei der Verdampfer (11) und/oder der Heizkörper (16) in eine Stirnwand (9) integriert angeordnet ist, **dadurch gekennzeichnet, dass** der Verdampfer (11) und/oder Heizkörper (16) eine tragende Funktion in der Stirnwand (9) übernimmt.

2. Klimaanlage nach Anspruch 1, **dadurch gekennzeichnet, dass** die Stirnwand (9) eine Öffnung (10) aufweist, in die der Verdampfer (11) und/oder Heizkörper (16) eingesetzt ist.

3. Klimaanlage nach einem der vorhergehenden Ansprüche, **dadurch gekennzeichnet, dass** der Verdampfer (11) und/oder Heizkörper (16) großflächig mittels einer umlaufenden gummielastischen Halterung (12) gelagert ist.

4. Klimaanlage nach einem der vorhergehenden Ansprüche, **dadurch gekennzeichnet, dass** der Verdampfer (11) und/oder Heizkörper (16) in einer in der Stirnwand (9) vorgesehenen Tasche oder Aufnahme gelagert ist, in die er gesteckt ist.

5. Klimaanlage nach einem der vorhergehenden Ansprüche, **dadurch gekennzeichnet, dass** der Verdampfer und/oder Heizkörper mittels einer oder mehrerer Clips-Verbindungen an der Stirnwand befestigt ist.

6. Klimaanlage nach einem der vorhergehenden Ansprüche, **dadurch gekennzeichnet, dass** der Verdampfer und/oder Heizkörper mittels einer Halterung gelagert ist, wobei er mittels einer oder mehrerer Schraubverbindungen an der Stirnwand befestigt ist.

7. Klimaanlage nach einem der vorhergehenden Ansprüche, **dadurch gekennzeichnet, dass** die Luftansaugung mit dem Gebläse (15) und gegebenenfalls einem Filter im Aggregatraum (6) angeordnet sind und an der Stirnwand (9) befestigt sind.

8. Klimaanlage nach einem der vorhergehenden Ansprüche, **dadurch gekennzeichnet, dass** im Innenraum des Kraftfahrzeugs (2) der Heizkörper (16) und die Luftverteilung (17) an der Stirnwand (9) befestigt ist.

9. Kraftfahrzeug **gekennzeichnet durch** eine Klimaanlage gemäß einem der Ansprüche 1 bis 8.

## Claims

1. An air conditioner for a motor vehicle (2) having a radiator (16), an evaporator (11), an air intake (14), a fan (15) and an air distributor (17), the evaporator (11) and/or the radiator (16) being integrated in a bulkhead (9),
**characterised in that**
the evaporator (11) and/or radiator (16) fulfils a supporting function in the bulkhead (9).

2. An air conditioner in accordance with claim 1,
**characterised in that**
the bulkhead (9) has an opening (10) into which the evaporator (11) and/or radiator (16) is placed.

3. An air conditioner in accordance with one of the preceding claims,
**characterised in that**
a large area of the surface of the evaporator (11) and/or radiator (16) is mounted by means of a peripheral, rubber-elastic fixing device (12).

4. An air conditioner in accordance with one of the preceding claims,
**characterised in that**
the evaporator (11) and/or radiator (16) is mounted in a pocket or recess in the bulkhead (9) into which it is inserted.

5. An air conditioner in accordance with one of the preceding claims,
**characterised in that**
the evaporator and/or radiator is fixed to the bulkhead by means of one or more clip connectors.

6. An air conditioner in accordance with one of the preceding claims,
**characterised in that**
the evaporator and/or radiator is mounted by means of a fixing device, it being fixed onto the bulkhead by one or more screw connections.

7. An air conditioner in accordance with one of the preceding claims,
**characterised in that**
the air intake is positioned in engine compartment (6) with the fan (15) and where applicable a filter and is fixed to the bulkhead (9).

8. An air conditioner in accordance with one of the preceding claims,
**characterised in that**
the radiator (16) and the air distributor (17) are fixed to the bulkhead (9) in the passenger compartment of the motor vehicle (2).

9. A motor vehicle **characterised by** an air conditioner in accordance with one of claims 1 to 8.

## Revendications

1. Installation de climatisation pour un véhicule automobile (2), comprenant un élément chauffant (16), un évaporateur (11), une admission d'air (14), un ventilateur (15) et un distributeur d'air (17), l'évaporateur (11) et/ou l'élément chauffant (16) étant disposé de manière intégrée dans une paroi frontale (9), **caractérisée en ce que** l'évaporateur (11) et/ou l'élément chauffant (16) prend en charge une fonction de support dans la paroi frontale (9).

2. Installation de climatisation selon la revendication 1, **caractérisée en ce que** la paroi frontale (9) présente une ouverture (10) dans laquelle est inséré l'évaporateur (11) et/ou l'élément chauffant (16).

3. Installation de climatisation selon l'une des revendications précédentes, **caractérisée en ce que** l'évaporateur (11) et/ou l'élément chauffant (16) est logé sur une grande surface au moyen d'un support (12) périphérique en caoutchouc élastique.

4. Installation de climatisation selon l'une des revendications précédentes, **caractérisée en ce que** l'évaporateur (11) et/ou l'élément chauffant (16) est logé dans une poche ou un logement prévu dans la paroi frontale (9), dans lequel/laquelle il est inséré.

5. Installation de climatisation selon l'une des revendications précédentes, **caractérisée en ce que** l'évaporateur et/ou l'élément chauffant est fixé à la paroi frontale au moyen d'une ou plusieurs liaisons par clips.

6. Installation de climatisation selon l'une des revendications précédentes, **caractérisée en ce que** l'évaporateur et/ou l'élément chauffant est logé au moyen d'un support, et est fixé à la paroi frontale au moyen d'une ou plusieurs liaisons vissées.

7. Installation de climatisation selon l'une des revendications précédentes, **caractérisée en ce que** l'admission d'air avec le ventilateur (15) et le cas échéant un filtre sont disposés dans la chambre de groupe (6) et sont fixés à la paroi frontale (9).

8. Installation de climatisation selon l'une des revendications précédentes, **caractérisée en ce qu'**à l'intérieur du véhicule automobile (2), l'élément chauffant (16) et le distributeur d'air (17) sont fixés à la paroi frontale (9).

9. Véhicule automobile, **caractérisé par** une installation de climatisation selon l'une des revendications 1 à 8.
